# EUROPEAN PATENT SPECIFICATION

(11) **EP 2 611 871 B1**
(45) Date of publication and mention of the grant of the patent: **19.06.2019**
(21) Application number: 11767795.5
(22) Date of filing: 31.08.2011
(51) Int. Cl.: C09D 5/08, B05D 7/00, B60B 17/00, B60B 37/04, C09D 7/40

(54) **PROTECTIVE COVERING FOR RAILWAY WHEEL SETS AND METHOD OF APPLICATION**
SCHUTZABDECKUNG FÜR EISENBAHNREIFENSÄTZE UND ANWENDUNGSVERFAHREN
REVÊTEMENT PROTECTEUR POUR ESSIEUX MONTÉS DE VÉHICULE FERROVIAIRE ET PROCÉDÉ D'APPLICATION

(30) Priority: 31.08.2010 IT BS20100147
(43) Date of publication of application: 10.07.2013
(73) Proprietor: Lucchini RS S.P.A., 24065 Lovere (BG) (IT)
(72) Inventor: CERVELLO, Steven, I-24065 Lovere (IT); SALA, Dimitri, I-24065 Lovere (IT)
(74) Representative: Sangiacomo, Ines
(86) International application number: PCT/IT2011/000304
(87) International publication number: WO 2012/029085

(56) References cited:
- EP-A1- 2 011 838
- WO-A2-2008/070077
- CN-A- 101 643 612
- DE-A1- 10 115 370
- DE-A1- 10 161 006
- GB-A- 2 225 737
- US-A- 3 756 646

## Description

### Field of the invention

The present invention relates generally to railway wheel sets, both wheel sets for drive and wheel sets for freight, and relates particularly to the protection of their metal surfaces against corrosion and the knocks of external bodies.

### Background art

Usually, the term "railway wheel set" means the assembly consisting of two wheels, the corresponding shaft or axle, and any transmission and braking members forming part of a railway rolling stock.

The railway wheel set, precisely because of its function, is the part of a railway vehicle which comes into direct contact with the rails. Along the tracks, the passing trains may encounter particularly severe environmental and mechanical conditions which can adversely affect the structural strength of their wheel sets. For example, along the path followed by the tracks, the air humidity and temperature may vary considerably. Moreover, the railway wheel sets may be easily struck by the ballast which is normally present along the tracks; in fact, as a result of the turbulence produced by the passing train, part of the ballast is sucked between the wheels and propelled against the metal surfaces of the wheel sets.

In the case of trains travelling at high speeds, of more than 250 km/h, the ballast strikes the surface of the wheel sets with such a force that it causes not only the local removal of the protective paint which is normally present as a covering on the wheel sets, but also scratching of the metal. This increases the occurrence of surface corrosion and maximizes the potential of formation of fatigue cracks in the metal of the wheel set, which cracks propagate due to the prolonged mechanical stresses normally acting on the wheel sets and may result in undesirable and serious structural failures.

In order to reduce the occurrence of such critical situations, it is therefore required to protect the free surfaces against corrosion and mechanical attack, namely those areas of the axle and the wheels which are not keyed onto or joined to other components (braking disc, bush, reducer) and they are therefore more exposed to external agents. For this purpose, paints which are able to protect the metal surfaces against corrosion and the knock due to foreign bodies, such as ballast, have already been proposed and applied onto the surfaces both of the axle and of the wheels. However, these paints have not always shown to be effective, especially in the case of knocks of a certain intensity which are typical at the high speed of modern trains, or in particularly unfavourable atmospheric conditions. Instead, with the spread of high-speed railway lines, there is an increasing need to provide a covering which can ensure adequate protection of the wheel sets over time and in all operating conditions.

Solutions have been proposed in fields other than the railway field, but these solutions, as will be explained, are not suitable for protection of wheel sets, especially when the latter are used in applications involving high-speed trains.

For example, patent application GB-A-2225737 describes a method for applying an anti-corrosive covering onto surfaces made of aluminium or aluminium-alloy, such as the wheel rims of motor vehicles, wherein the metal surface is firstly covered with a layer of a first paint, i.e. a primer, which has the function of promoting the adhesion of other layers of the covering; the primer is hardened using heat, and a layer of lacquer paint is then applied onto it to provide resistance against UV rays. The primer itself is an acrylic-based lacquer paint.

CN 101 643 612 A discloses a water-proof, antiseptic, wear-proof nanopaint, wherein the paint comprises three layers, a bottom layer, a middle layer and a surface layer outwards orderly from the contact surface of a metal substrate surface; each layer comprising epoxy resins.

GB 2 225 737 A discloses anti-corrosive coatings for wheel rims of passenger vehicles.

International patent application WO 2008/070077 describes a protective covering intended to be applied onto the bottom of motor vehicles. The covering comprises layers of acrylic primers which are applied onto each other "wet-on-wet", namely before each layer has dried, and a layer based on a compound of benzylamine and hexamethylene diisocyanate. All the layers forming the covering are hardened simultaneously.

The traditional coverings described above are not suitable for being effectively applied onto railway wheel sets, since the operating conditions of the latter are generally much more severe than the operating conditions of motor vehicles. For example, railway wheel sets operate at working temperatures which vary between -40°C, as occurs in Nordic countries, and +35°C, as occurs in Mediterranean countries. Moreover, in the zone of the braking discs, the covering of the wheel set is exposed to temperatures which may easily exceed 100°C during braking of the train. Therefore, it is evident that railway wheel sets must be effectively protected against corrosion and the knocks of ice and ballast at extreme temperatures.

At high speeds, the knock of ballast and ice on the wheel set is comparable to the knock of steel bullets. The traditional coverings described above tend to soften at temperatures higher than 70°C and, therefore, they do not have characteristics such as to ensure adequate protection of the wheel sets in all the operating conditions which they may encounter during their working life of several decades.

Document WO 2008/070077 discloses a coating composition containing a mixture of at least one diurea compound and at least one layered silicate mineral in which the composition is useful for a basecoat composition in a wet-on-wet basecoat/clearcoat application and is useful as a basecoat in a wet-on-wet-on-wet primer/basecoat/clearcoat application process.

### Object and summary of the invention

Therefore, an object of the present invention is to propose a covering which, when applied onto the free surfaces of a railway wheel set - namely the surfaces which are not keyed onto, joined to or in contact with other parts -, is able to ensure effective protection of the wheels and the axle against corrosion as well as the knock of external bodies travelling at high speed, for example bodies which are comparable to steel bullets with a surface hardness of 400 Vickers, a diameter of 32 mm and a splay angle of the tip equal to 105°, at a temperature ranging from -40°C to +150°C.

This object is achieved by means of a covering for protection against corrosion and knocks, specifically designed for railway wheel sets, consisting of at least three superimposed layers of different paints according to Claim 1, wherein the paints of the second and third layer also contain reinforcing fibres.

Advantageously, the second layer of paint, i.e. the intermediate layer, provides a substantially elastic support for the third layer of the paint, i.e. the outer layer, which in turn is very resistant to the knock of ballast and ice.

When the covering is completely operative, the surface hardness of the third layer is at a maximum; therefore, this layer ensures an adequate resistance to breakage and flaking normally caused by the knock of the ballast against the conventional coverings of railway wheel sets. The second layer, precisely because of its intermediate position between the primer and the third layer, is characterized by a high elasticity; in other words, the intermediate layer of the covering acts as an elastic cushion which absorbs the local deformations imparted to the third layer by the knock of ballast or ice.

Essentially, the covering according to the present invention is characterized both by a good degree of elasticity, which is particularly useful for dissipating the knock force, and by an optimum toughness and resistance to flaking and breakage; accordingly, the covering ensures protection of the railway wheel set also in the case of adverse atmospheric conditions and extremely violent knocks. Laboratory tests have confirmed that the covering protects effectively the metal surface of railway wheel sets within the temperature range of -40°C to +150°C. For this purpose, knock tests were conducted in accordance with the standard EN 13261; moreover, the railway wheel sets provided with the covering according to the present invention successfully passed the duration and fatigue tests.

The covering is not subject to softening when its temperature reaches and exceeds 70°C.

In particular, the covering according to the present invention comprises at least one first layer of a paint in direct contact with the metal surface of the pertinent wheel set, at least one third outer layer of another paint, for example which is exposed to the atmosphere, and at least one intermediate layer between the first layer and the third layer, consisting of yet another paint.

The first layer includes a first paint which promotes adhesion of the other covering layers to the metal surface while protecting the metal against corrosion.

Preferably, the first paint is an epoxy-based paint. For example, it is possible to employ any primer which is normally used in the aeronautical industry for covering aircraft propellers. For example, a suitable primer is commercially available under the trade name: 40-P1-2 CF Metal Adhesion Primer Green.

Preferably, the first layer of the covering according to the present invention has a thickness of between 5 µm and 20 µm, and more preferably within the range of 10-15 µm.

The second layer of the covering according to the present invention includes a second paint, which is different from the first paint, consisting of an epoxy-type, amine-catalyzed paint loaded with reinforcing fibres. For example, a paint suitable for the purpose is commercially available under the trade name: 15-F4-HTP Epoxy Aerospace HT Primer.

Preferably, the second layer of the covering according to the present invention has a thickness of between 1500 µm and 4000 µm, and more preferably within the range of 2500-3500 µm.

The third layer of the covering according to the present invention includes a third paint which is also an epoxy-based, amine-catalyzed paint loaded with reinforcing fibres. For example, a paint suitable for the purpose is commercially available under the trade name: 25-F4-HTF Epoxy Aerospace HT Finish.

Preferably, the third layer of the covering according to the present invention has a thickness of between 1500 µm and 4000 µm, and more preferably within the range of 2500-3500 µm.

Preferably, each layer of paint is applied in the liquid state; more preferably, each layer of paint is self-hardening.

Preferably, the reinforcing fibres are synthetic, for example glass fibres. More preferably, the glass fibres have lengths in the range of 0.5 to 2.0 mm.

A further object of the present invention is to provide a method for applying a protective covering to railway wheel sets, said protective covering being effective in all the conditions of use of said wheel sets.

Therefore, according to a second aspect thereof, the invention relates to a method, according to Claim 6, for applying a protective covering to the free metal surfaces of railway wheel sets consisting of two wheels keyed onto the same axle.

In particular, the method comprises the following steps, performed in the following time sequence:
a) preliminarily treating the surfaces to be covered in order to clean them;
b) applying at least one first layer of a first paint onto said surfaces for promoting the adhesion of the other layers of the covering, followed by fading and drying of the first layer;
c) applying at least one second layer of a second epoxy-based paint added with reinforcing fibres onto the first layer, followed by fading and drying of this second layer;
d) applying at least one third layer of a third epoxy-based paint added with reinforcing fibres onto said second layer, followed by fading and drying of this third layer.

Therefore, the second layer is applied onto the first layer after the latter has hardened (completely faded and dried), and the third layer is applied onto the second layer after it has completely hardened. The paints are not applied wet-on-wet, i.e. they are not applied onto layers which have not yet dried completely.

### Brief description of the drawings

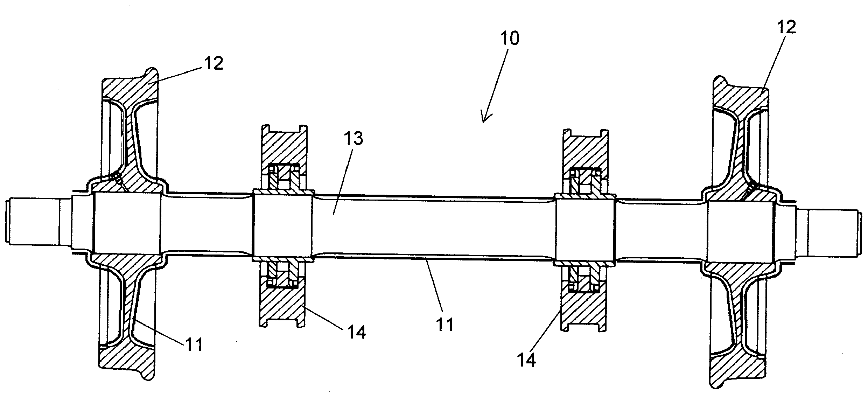

However, further details of the invention will become clear from the description provided hereinbelow with reference to the accompanying drawing, in which the sole figure shows a schematic view of a railway wheel set provided with the covering.

### Detailed description of the invention

In said drawing there are schematically shown a wheel set 10 for railway vehicles and an associated protective covering 11. The wheel set comprises a pair of wheels 12 which are connected to each other by means of an axle 13 onto which the discs 14 of a braking system and/or any transmission systems can be keyed. The protective covering 11 may be applied either onto all the surfaces of the axle and each wheel or only onto the free surfaces - i.e. those surfaces which are not keyed onto, joined to or in contact with other parts - of the axle and the wheel, i.e. only onto the surfaces which are actually exposed to environmental conditions and knocks.

The protective covering 11 according to the invention includes a first layer A, a second layer B and a third layer C, respectively consisting of the following products:
Layer A: a primer which promotes adhesion, for example a primer employed in the aeronautical industry for painting aircraft propellers. For example, a suitable primer is marketed under the trade name: 40-P1-2 CF Metal Adhesion Primer Green.
Layer B: a non-toxic, epoxy-based, amine-catalyzed paint reinforced with reinforcing fibres. For example, a suitable paint is marketed under the trade name: 15-F4-HTP Epoxy Aerospace HT Primer; the reinforcing fibres are mixed with the liquid paint prior to its application onto the layer A.
Layer C: a non-toxic, epoxy-based, amine-catalyzed paint reinforced with reinforcing fibres. For example, a suitable paint is marketed under the trade name: 25-F4-HTF Epoxy Aerospace HT Finish; the reinforcing fibres are mixed with the liquid paint prior to its application onto the layer B.

In particular, moreover, the products intended to form the layers B and C incorporate reinforcing fibres consisting of glass fibres with lengths in the range of 0.5 to 2.0 mm, which form a structure able to make the covering tougher and stronger within a wide temperature range.

The starting products for layers A, B and C are in the liquid state and are applied as such onto the surfaces to be protected. The protective covering 11 is formed using the following method:
**1.** Preparing of the metal surfaces onto which the covering is applied by:
   a. washing the surfaces a first time (i.e., using a clean cloth soaked with a nitro thinner);
   b. sandpapering the surfaces (i.e., using sandpaper with a grain size of 80-100);
   c. washing the surfaces a second time (i.e., using a clean cloth soaked with a nitro thinner);
   d. drying the surfaces;
**2.** Preparation and application of the layer A, consisting of 40-P1-2 CF Metal Adhesion Primer Green, according to the following steps:
   a. preparing this product by carefully mixing the basic components in the appropriate volume ratios (i.e., 2:1 and then 3:2);
   b. applying a layer of product of the desired thickness (i.e. 10 µm);
   c. fading the product (i.e., at a temperature of +25°C for 20 minutes);
   d. drying the product (i.e., at a temperature of 60°C for 90 minutes);
**3.** Preparation and application of the layer B, consisting of 15-F4-HTP Epoxy Aerospace HT Primer, according to the following steps:
   a. preparing this product by carefully mixing the basic components in the appropriate volume ratios (i.e. 100:56);
   b. applying a layer of product of the desired thickness (i.e. 2800 µm);
   c. fading the product (i.e., at a temperature of +25°C for 20 minutes);
   d. drying the product (i.e., at a temperature of 60°C for 90 minutes);
**4.** Preparation and application of the layer C, consisting of 25-F4-HTF Epoxy Aerospace HT Finish, according to the following steps:
   a. preparing this product by carefully mixing the basic components in the appropriate volume ratios (i.e. 100:56);
   b. applying a layer of product of the desired thickness (i.e. 2800 µm);
   c. fading the product (i.e., at a temperature of +25°C for 20 minutes);
   d. drying the product (i.e., at a temperature of 60°C for 90 minutes).

In the resulting multi-layer protective covering, the layer B has basically the function of providing the covering with elasticity in order to promote the absorption and dissipation of the energy produced by the knock of a foreign body against the railway wheel set. The layer C performs the function of protecting the underlying layers A and B against flaking and cracks.

At the end of the last application step, the resulting degrees of elasticity and surface resistance, in addition to the stability of the mechanical properties in a temperature range of between -40°C and +150°C, provide the protective covering with the ability of withstanding mechanical knocks with a high knock force (certainly up to 12J but also higher, comparable to a steel bullet with a surface hardness of 400 Vickers, a diameter of 32 mm and a tip splay angle of 105°) within the afore mentioned temperature range.

## Claims

1. Protective covering of at least part of the metal surfaces of a railway wheel set (10) consisting of a pair of wheels (12) rigidly connected by an axle (13), the covering comprising at least one first layer (A) in direct contact with the metal surface of said railway wheel set, consisting of a first paint promoting the adhesion of further layers of the covering, at least one second intermediate layer (B) onto said first layer consisting of a second epoxy-based paint, and at least one third outer layer (C) onto said second layer consisting of a third epoxy-based paint, wherein the second and third paints are loaded with reinforcing fibres, wherein the reinforcing fibres added to the paints of the second and third layer are glass fibres having a length in the range from 0.5 to 2.0 mm, and wherein said first layer has a thickness of between 5 µm and 20 µm, said second layer has a thickness of between 1500 µm and 4000 µm, and said third layer has a thickness of between 1500 µm and 4000 µm, wherein the covering layers (A, B and C) are at least applied onto the free surfaces of the axle and the wheel, which are essentially the surfaces exposed to corrosion and knocks with external bodies.

2. Protective covering according to Claim 1, wherein the covering layers (A, B and C) are applied onto all the surfaces of the axle and of each wheel.

3. Protective covering according to Claim 1, wherein the covering layers (A, B and C) are only applied onto the free surfaces of the axle and the wheel, which are essentially the surfaces exposed to corrosion and knocks with external bodies.

4. Protective covering according to any one of the preceding claims, wherein the paints forming each covering layer are originally in the liquid state.

5. Protective covering according to any one of the preceding claims, wherein said first layer has a thickness of between 10 µm and 15 µm, said second layer has a thickness of between 2500 µm and 3500 µm, and said third layer has a thickness of between 2500 µm and 3500 µm.

6. Method for applying a protective covering against corrosion and knocks, particularly to the metal surfaces of railway wheel sets, comprising the steps of:
a) preliminarily treating the surfaces to be covered in order to clean them;
b) applying at least one first layer (A) of a first paint onto said surfaces for promoting the adhesion of the other layers of the covering, followed by fading and drying of the first layer, wherein said first layer has a thickness of between 5 µm and 20 µm;
c) applying at least one second layer (B) of a second epoxy-based paint added with reinforcing fibres onto the first layer (A), followed by fading and drying of this second layer, wherein said reinforcing fibres are glass fibres having a length in the range from 0.5 to 2.0 mm and wherein said second layer has a thickness of between 1500 µm and 4000 µm;
d) applying at least one third layer (C) of a third epoxy-based paint added with reinforcing fibres onto said second layer, followed by fading and drying of this third layer, wherein said reinforcing fibres are glass fibres having a length in the range from 0.5 to 2.0 mm and wherein said third layer has a thickness of 1500 µm and 4000 µm, and wherein the covering layers (A, B and C) are at least applied onto the free surfaces of the axle and the wheel, which are essentially the surfaces exposed to corrosion and knocks with external bodies.

7. Method according to Claim 6, wherein step a) further comprises;
- washing the surfaces a first time;
- sandpapering the surfaces; and
- washing said surfaces a second time and then drying them.

8. Method according to Claims 6 and 7, wherein the first covering layer (A) has preferably a thickness of 10 µm and is faded at a temperature of about 25°C for 20 minutes, followed by drying at a temperature of about 60°C for about 90 minutes; the second layer (B) has preferably a thickness of 2800 µm and is faded at a temperature of about 25°C for 20 minutes, followed by drying at a temperature of about 60°C for about 90 minutes; the third layer (C) has preferably a thickness of 2800 µm and is faded at a temperature of about 25°C for 20 minutes, followed by drying at a temperature of about 60°C for about 90 minutes.

## Patentansprüche

1. Schutzabdeckung zumindest eines Teils der Metallflächen eines Eisenbahnradsatzes (10), der aus einem Paar von Rädern (12) besteht, die durch eine Welle (13) starr verbunden sind, wobei die Abdeckung mindestens eine erste Schicht (A) in direktem Kontakt mit der Metalloberfläche des Eisenbahnradsatzes, bestehend aus einem die Haftung weiterer Schichten der Abdeckung fördernden ersten Lack, mindestens einer zweiten Zwischenschicht (B) auf die erste Schicht, bestehend aus einem zweiten Lack auf Epoxidbasis, und mindestens eine dritte Außenschicht (C) auf die zweite Schicht, bestehend aus einem dritten Lack auf Epoxidbasis,
wobei der zweite und der dritte Lack mit Verstärkungsfasern beladen sind,
wobei die zu den Lacken der zweiten und dritten Schicht zugesetzten Verstärkungsfasern Glasfasern mit einer Länge im Bereich von 0,5 bis 2,0 mm sind, und
wobei die erste Schicht eine Dicke zwischen 5 µm und 20 µm aufweist, die zweite Schicht eine Dicke zwischen 1500 µm und 4000 µm aufweist, und die dritte Schicht eine Dicke zwischen 1500 µm und 4000 µm aufweist,
wobei die Deckschichten (A, B und C) zumindest auf die freien Oberflächen der Welle und des Rades aufgebracht sind, die im Wesentlichen der Korrosion und den Schlägen durch Außenkörpern ausgesetzt sind.

2. Schutzabdeckung nach Anspruch 1,
wobei die Deckschichten (A, B und C) auf alle Flächen der Welle und jedes Rades aufgebracht sind.

3. Schutzabdeckung nach Anspruch 1,
wobei die Deckschichten (A, B und C) nur auf die freien Oberflächen der Welle und des Rades aufgebracht werden, die im Wesentlichen der Korrosion und den Schlägen durch Außenkörpern ausgesetzt sind.

4. Schutzabdeckung nach einem der vorhergehenden Ansprüche,
wobei die die jeweilige Deckschicht bildenden Lacken ursprünglich im flüssigen Zustand vorliegen.

5. Schutzabdeckung nach einem der vorhergehenden Ansprüche,
wobei die erste Schicht eine Dicke zwischen 10 µm und 15 µm aufweist, die zweite Schicht eine Dicke zwischen 2500 µm und 3500 µm aufweist, und die dritte Schicht eine Dicke zwischen 2500 µm und 3500 µm aufweist.

6. Verfahren zum Aufbringen einer Schutzabdeckung gegen Korrosion und Schlägen, insbesondere auf die Metalloberflächen von Eisenbahnradsätzen, umfassend die Schritte:
a) Vorbehandeln der abzudeckenden Oberflächen, um diese zu reinigen;
b) Aufbringen mindestens einer ersten Schicht (A) eines ersten Lacks auf diese Oberflächen zur Förderung der Haftung der anderen Schichten der Abdeckung, gefolgt von einem Abdunsten und Trocknen der ersten Schicht, wobei die erste Schicht eine Dicke zwischen 5 µm und 20 µm aufweist;
c) Aufbringen mindestens einer zweiten Schicht (B) eines mit Verstärkungsfasern versetzten zweiten Lacks auf Epoxidbasis auf die erste Schicht (A), gefolgt von einem Abdunsten und Trocknen dieser zweiten Schicht, wobei die Verstärkungsfasern Glasfasern mit einer Länge im Bereich von 0,5 bis 2,0 mm sind und wobei die zweite Schicht eine Dicke zwischen 1500 µm und 4000 µm aufweist;
d) Aufbringen mindestens einer dritten Schicht (C) eines mit Verstärkungsfasern versetzten dritten Lacks auf Epoxidbasis auf die zweite Schicht, gefolgt von einem Abdunsten und Trocknen dieser dritten Schicht, wobei die Verstärkungsfasern Glasfasern mit einer Länge im Bereich von 0,5 bis 2,0 mm sind und wobei die dritte Schicht eine Dicke von 1500 µm und 4000 µm aufweist, und wobei die Deckschichten (A, B und C) zumindest auf die freien Oberflächen der Welle und des Rades aufgebracht werden, die im Wesentlichen der Korrosion und den Schlägen durch Außenkörpern ausgesetzt.

7. Verfahren nach Anspruch 6,
wobei Schritt a) ferner umfasst:
- Waschen der Oberflächen ein erstes Mal;
- Schleifen der Oberflächen; und
- Waschen der Oberflächen ein zweites mal und anschließend Trocknen derselben.

8. Verfahren nach den Ansprüchen 6 und 7
wobei die erste Deckschicht (A) vorzugsweise eine Dicke von 10 µm aufweist und bei einer Temperatur von etwa 25°C für 20 Minuten adgedunstet wird, gefolgt von einer Trocknung bei einer Temperatur von etwa 60°C für etwa 90 Minuten; die zweite Schicht (B) vorzugsweise eine Dicke von 2800 µm aufweist und bei einer Temperatur von etwa 25°C für 20 Minuten adgedunstet wird, gefolgt von einer Trocknung bei einer Temperatur von etwa 60°C für etwa 90 Minuten; die dritte Schicht (C) vorzugsweise eine Dicke von 2800 µm aufweist und bei einer Temperatur von etwa 25°C für 20 Minuten adgedunstet wird, gefolgt von einer Trocknung bei einer Temperatur von etwa 60°C für etwa 90 Minuten.

## Revendications

1. Revêtement de protection d'au moins une partie des surfaces métalliques d'un essieu de chemin de fer monté (10) consistant en une paire de roues (12) reliées rigidement par un essieu (13), le revêtement comprenant au moins une première couche (A) en contact direct avec la surface métallique dudit essieu de chemin de fer monté, consistant en une première peinture favorisant l'adhésion d'autres couches du revêtement, au moins une seconde couche intermédiaire (B) sur ladite première couche consistant en une deuxième peinture à base d'époxy et au moins une troisième couche extérieure (C) sur ladite deuxième couche consistant en une troisième peinture à base d'époxy, dans lequel la deuxième et la troisième peinture sont chargées de fibres de renforcement, dans lequel les fibres de renforcement ajoutées aux peintures de la deuxième et de la troisième couche sont des fibres de verre ayant une longueur comprise entre 0,5 et 2,0 mm, et dans lequel ladite première couche a une épaisseur comprise entre 5 µm et 20 µm, ladite deuxième couche a une épaisseur comprise entre 1500 µm et 4000 µm, et ladite troisième couche a une épaisseur comprise entre 1500 µm et 4000 µm, dans lequel les couches de revêtement (A, B et C) sont au moins appliquées sur les surfaces libres de l'essieu et de la roue, qui sont essentiellement les surfaces exposées à la corrosion et aux chocs avec des corps externes.

2. Revêtement de protection selon la Revendication 1, dans lequel les couches de revêtement (A, B et C) sont appliquées sur toutes les surfaces de l'essieu et de chaque roue.

3. Revêtement de protection selon la Revendication 1, dans lequel les couches de revêtement (A, B et C) sont uniquement appliquées sur les surfaces libres de l'essieu et de la roue, qui sont essentiellement les surfaces exposées à la corrosion et aux chocs avec des corps extérieurs.

4. Revêtement de protection selon l'une quelconque des revendications précédentes, dans lequel les peintures formant chaque couche de revêtement sont à l'origine à l'état liquide.

5. Revêtement de protection selon l'une quelconque des revendications précédentes, dans lequel ladite première couche a une épaisseur comprise entre 10 µm et 15 µm, ladite deuxième couche a une épaisseur comprise entre 2500 µm et 3500 µm et ladite troisième couche a une épaisseur comprise entre 2500 µm et 3500 µm.

6. Méthode d'application d'un revêtement de protection contre la corrosion et les chocs, particulièrement pour les surfaces métalliques des essieux de chemin de fer montés, comprenant les étapes de:
a) traiter préalablement les surfaces à recouvrir pour les nettoyer;
b) appliquer au moins une première couche (A) d'une première peinture sur lesdites surfaces pour favoriser l'adhésion des autre couches de revêtement, suivi de la dégradation et du séchage de la première couche, dans laquelle ladite première couche a une épaisseur comprise entre 5 µm et 20 µm;
c) appliquer au moins une deuxième couche (B) d'une deuxième peinture à base d'époxy avec une ajoute de fibres de renforcement sur la première couche (A), suivi de la dégradation et du séchage de cette deuxième couche, dans laquelle lesdites fibres de renforcement sont des fibres de verre ayant une longueur comprise entre 0,5 et 2,0 mm et dans laquelle ladite deuxième couche a une épaisseur comprise entre 1500 µm et 4000 µm;
d) appliquer au moins une troisième couche (C) d'une troisième peinture à base d'époxy avec des fibres de renforcement sur ladite deuxième couche, suivi de la dégradation et du séchage de cette troisième couche, dans laquelle lesdites fibres de renforcement sont des fibres de verre ayant une longueur comprise entre 0,5 et 2,0 mm et dans laquelle ladite troisième couche a une épaisseur comprise entre 1500 µm et 4000 µm, et dans laquelle les couches de revêtement (A, B et C) sont au moins appliquées sur les surfaces libres de l'essieu et de la roue, qui sont essentiellement les surfaces exposées à la corrosion et aux chocs avec des corps extérieurs.

7. Méthode selon la Revendication 6, dans laquelle l'étape a) comprend en outre;
- laver les surfaces une première fois;
- poncer les surfaces; et
- laver lesdites surfaces une seconde fois et puis les sécher.

8. Méthode selon les Revendications 6 et 7, dans laquelle la première couche de revêtement (A) a préférablement une épaisseur de 10 µm et est dégradée à une température d'environ 25°C pendant 20 minutes, suivi d'un séchage a une température d'environ 60°C pendant environ 90 minutes; la deuxième couche (B) a préférablement une épaisseur de 2800 µm et est dégradée à une température d'environ 25°C pendant 20 minutes, suivi d'un séchage à une température d'environ 60°C pendant environ 90 minutes; la troisième couche (C) a préférablement une épaisseur de 2800 µm et est dégradée à une température d'environ 25°C pendant 20 minutes, suivi d'un séchage à une température d'environ 60°C pendant environ 90 minutes.
